# EUROPEAN PATENT SPECIFICATION

(11) **EP 2 808 443 B1**
(45) Date of publication and mention of the grant of the patent: **13.01.2016**
(21) Application number: 13169858.1
(22) Date of filing: 30.05.2013
(51) Int. Cl.: D21G 1/00, F16F 15/02

(54) **A fiber web machine**
Faserbahnmaschine
Machine à bande fibreuse

(43) Date of publication of application: 03.12.2014
(73) Proprietor: Valmet Technologies, Inc., 02150 Espoo (FI)
(72) Inventor: Hakola, Jani, FI-04460 Nummenkylä (FI)
(74) Representative: Berggren Oy Ab

(56) References cited:
- EP-A1- 1 411 254
- EP-A2- 1 905 712

## Description

The invention relates to a fiber web machine comprising a damper for controlling vibrations.

EP-A-1905712 discloses a fiber wels machine comprising a damper.

In fiber web machines the fiber web is produced and treated in an assembly formed by a number of apparatuses arranged consecutively in a process line.

A typical production and treatment line comprises a head box, a wire section and a press section as well as a subsequent drying section and a reel-up. The production and treatment line can further comprise other devices and sections for finishing the fiber web, for example, a sizer, a calender, a coating section. The production and treatment line also comprises at least one winder for forming customer rolls as well as a roll packaging apparatus. In this description and the following claims by fiber webs are meant for example a paper, board, tissue webs. Each section and device comprises several different components in connection of which vibrations may occur. For example vibrations may occur in a nip, which is formed in between two elements, typically between two rolls but also the nip can be formed with a roll, a belt, a shoe or corresponding element and a counter-element of corresponding or different kind, often at least one of the nip forming elements is a roll. The fiber web is passed through the nip by itself or supported by a belt, a felt, a wire or a corresponding fabric. In the nip the fiber web is pressed by the nip pressure in order to remove water from the web or to effect to the properties of the web. Typical nips of a fiber web production line are press nips in which water is removed, calendar nips in which the web is treated for example to achieve certain surface properties such as gloss, reeling and winding nips in which the nip effect is used for the reeling/winding of the fiber web.

For example vibration at a frequency of 20 Hz occurs in the bases of parts/devices of paper or board machines, such vibration in large structures, such as, for example, multiroll calenders, causing premature fatigue of structures and, at worst, process disturbances and breakage of structures. As known in the state of the art, attempts have been made to solve this problem by mounting passive dampers in the upper part of a part/device having a high structure in a paper or board machine, which are tuned to a given desired frequency, typically from 7 to 9 Hz. Using this arrangement, attempts have been made to control the machine-direction vertical vibration of the above-mentioned frequency in the part/device of the paper or board machine itself, but it has not made possible it to control vibrations in an overall manner. In WO2006084955 (FI20055065) is disclosed a foundation arrangement for a paper or board machine or equivalent for supporting a part or a device of the paper or board machine. The part or device is supported on a solid massive base, which is supported on building foundations by means of a moving coupling, which moving coupling forms damping and height-adjustment elements of the base and comprises spring and damping elements. Also a semi-active mass damper can be arranged in connection with the base for damping horizontal and vertical vibration between the base and the part or the device. This arrangement is suitable to attenuate vibration of bases of parts/devices of paper or board machines but not vibration that occurs in different components of sections and devices of a fiber web machine.

An object of the invention is to create a fiber web machine comprising a damper for controlling vibrations of different components of sections and devices, especially for controlling vibrations of a nip and in which the disadvantages and problems of prior art are eliminated or at least minimized.

In order to achieve the above mentioned objects fiber web machine comprising a damper for controlling vibrations according to the invention is mainly characterized by the features of the characterizing clause of claim 1.

According to the invention the fiber web machine comprises a damper for controlling vibrations of different components of sections and/or devices of the fiber web machine and the damper comprises a frame and a support element for attaching the damper to a component of a fiber web machine for damping vibration, inside the frame a liquid volume, advantageously an oil volume, a channel for liquid flow, an adjustable flow restrictor located in the channel for controlling flow of the liquid in the liquid volume and an inertial mass mounted to the frame by mounting springs floating in the liquid volume. The inertial mass is movable in direction of vibration such that when the frame vibrates the inertial mass moves towards the support element and forces the liquid volume to decrease and a liquid flow into the channel creating a pressure loss in channel, which provides damping.

Advantageously the damper is mounted to a component of the fiber web machine by mounting means such that the support element of the damper is attached to the component and the frame of the damper is not in contact with the component or with possible other components or structures of the fiber web machine. According to an advantageous feature the fiber web machine comprises a nip formed between a roll and its counter element and that the damper for controlling vibrations is mounted to at least one end of a shaft of the roll. Advantageously the nip is a calender, sizer or reel nip. According to another advantageous feature the fiber web machine comprises a reeling nip formed between a parent roll and a reeling cylinder, in which the parent roll is supported against the reeling cylinder by reeling forks and the damper is attached to at least one reeling fork.

Thus the damper for controlling vibrations is advantageously utilized in a nip of a fiber web machine, which nip is formed between a roll and its counter element. The roll forming the nip of the fiber web machine is provided with the damper according to the invention such that the vibrations occurring in the nip are controlled and damped. The counter element can be another roll, a fiber web roll, a belt, a shoe or corresponding element.

Advantageously the inertia of the inertial mass opposes the movement of the frame when vibration frequency exceeds the lowest natural frequency of the damper.

According to an advantageous feature the adjustable flow restrictor is provided to create viscous damping force and the viscous damping force is adjusted with the adjustable flow restrictor by choice of liquid used and by choosing the damping between 1,0 x 10⁵ - 1,0 x 10⁷ Ns/m.

In the following the invention is explained in detail with reference to the accompanying drawing to which the invention is not to be narrowly limited.

In figure 1 is shown schematically an example of a damper.

In figure 2 is shown schematically an example of the damper in a calender nip of a fiber web machine.

In figure 3 is shown schematically an example of the damper in a reel-up of a fiber web machine.

During the course of the following description like numbers and signs will be used to identify like elements according to the different views which illustrate the invention and its advantageous examples. It should be noted that when in the following directions (for example upwards, downwards,..) are discussed, it is in reference to the accompanying figure but not meant as any limitation in actual use positions, in which the respective directions are to be considered in view of the vibration direction and in view of mounting of the damper in its place.

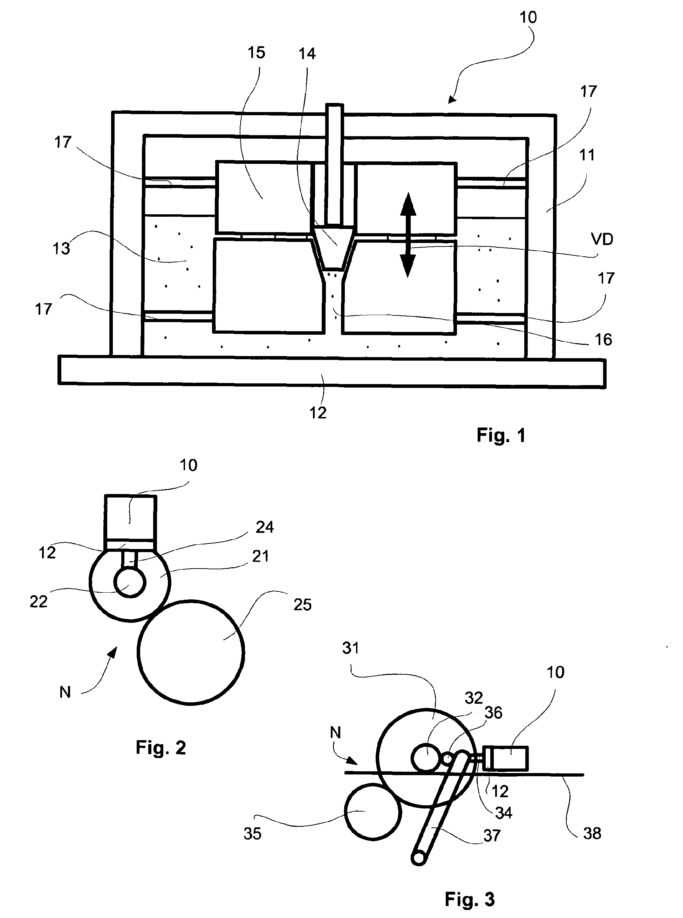

In figure 1 is schematically shown an example of a damper 10 which comprises a frame 11 and a support element 12 for attaching the damper 10 to a component of a fiber web machine for damping vibration. Inside the frame 11 a liquid volume, advantageously oil volume 13 is formed. In this example liquid in the liquid volume 13 is indicated by the dotted area. Flow of the liquid in the liquid volume is controlled by an adjustable flow restrictor 14. The damper 10 also comprises an inertial mass 15, which is mounted to the frame 11 of the damper by mounting springs 17. The mounting springs 17 are advantageously disc springs. The inertial mass 15 is movable in the direction of vibration VD due to the mounting by mounting springs 17, which allow the movement of the inertial mass 15. When the frame 11 vibrates, the inertia of the inertial mass 15 opposes the movement of the frame 11 when vibration frequency exceeds the lowest natural frequency of the damper 10 (lower frequency limit). In this case when the inertial mass 15 moves towards the support element 12 (downwards in the figure) in respect of the frame 11, it forces the liquid volume 13 below to decrease and to the channel 16 constructed in the inertial mass 15 and in the channel 16 upwards and pressure loss in channel 16 , which provides damping. The adjustable flow restrictor 14 provides viscous damping force. The viscous damping force can be adjusted with the adjustable flow restrictor 14 and limits to the adjustment possibilities can be defined by choice of liquid used and the acceleration of the flow. The damper 10 is mounted to the component of the fiber web machine such that only the support element of the damper 10 is attached to the component and a fixed structure is not needed as a secondary mounting point.

In figure 2 is shown an example, in which the damper 10 is provided for damping vibration in a nip N formed between two rolls 21, 25 of a fiber web machine. The damper 10 is attached to a shaft end 22 of one of the rolls 21. The support element 12 of the damper 10 is connected by mounting means 24 to the shaft end 22. The other shaft end of the roll 21 may also be provided with a corresponding damper 10. The nip N is for example a calender or a press or a sizer or a reeling or a winding nip i.e. one of the rolls may be a fiber web roll in reeling or in winding. The damper 10 is mounted to the shaft end 22 such that only the support element 12 of the damper 10 is attached and the frame 11 of the damper 10 is not in contact with any parts or structures of the fiber web machine.

In figure 3 is shown an example, in which the damper 10 is provided for damping vibration in a nip N of a reel-up of a fiber web machine. In the reel-up a parent roll 31 is reeled around a reeling shaft 32 and the reeling nip N is formed between the parent roll 31 and a reeling cylinder 35. The reeling forks 37 are supporting the parent roll 31 against the reeling cylinder 35. As the reeling shaft 32 rotates on the guides 38 it has rotating loading rolls 36. The damper 10 is attached to the reeling fork 37 near its upper end and opposite to the loading roll 36. The support element 12 of the damper 10 is connected by mounting means 34 to the fork 37. The other end reeling fork may also be provided with a corresponding damper 10. The damper 10 is mounted to the fork 37 such that only the support element 12 of the damper 10 is attached and the frame 11 of the damper 10 is not in contact with any parts or structures of the reel-up.

## Claims

1. Fiber web machine comprising a damper for controlling vibrations of different components of sections and/or devices of the fiber web machine, wherein the damper (10) comprises
a frame (11) and a support element (12) for attaching the damper (10) to a component of a fiber web machine for damping vibration,
inside the frame (11) a liquid volume, advantageously an oil volume (13),
a channel (16) for liquid flow,
an adjustable flow restrictor (14) located in the channel (16) for controlling flow of the liquid in the liquid volume (13) and
an inertial mass (15) mounted to the frame (11) by mounting springs (17) floating in the liquid volume (13)
and that the inertial mass (15) is movable in direction of vibration (VD) such that when the frame (11) vibrates the inertial mass (15) moves towards the support element (12) and forces the liquid volume (13) to decrease and a liquid flow into the channel (16) creating a pressure loss in said channel (16), which provides damping.

2. Fiber web machine according to claim 1, **characterized in, that** the damper (10) is mounted to a component (22; 37) of the fiber web machine by mounting means (24; 34) such that the support element (12) of the damper (10) is attached to the component (22; 37) without connection to a fixed support structure.

3. Fiber web machine according to claim 1 or 2, **characterized in, that** the fiber web machine comprises a nip (N) formed between a roll (21) and its counter element (25) and that the damper (10) for controlling vibrations is mounted to at least one end of a shaft of the roll (21).

4. Fiber web machine according to claim 1 or 2, **characterized in, that** the fiber web machine comprises a nip (N) formed between a roll (31) and its counter element (35) and that the nip is a reeling nip (N) formed between a parent roll (31) and a reeling cylinder (35), in which the parent roll (31) is supported against the reeling cylinder (35) by reeling forks (37), and that the damper (10) is attached to the reeling fork (37).

5. Fiber web machine according to claim 3, **characterized in, that** the nip (N) is a calender, sizer or reel nip (N).

6. Fiber web machine according to claim 1, **characterized in, that** the mounting springs (17) are disc springs.

7. Fiber web machine according to claim 1, **characterized in, that** the inertia of the inertial mass (15) opposes the movement of the frame (11) when vibration frequency exceeds the lowest natural frequency of the damper (10).

8. Fiber web machine according to claim 1, **characterized in, that** the adjustable flow restrictor (14) is provided to create viscous damping force.

9. Fiber web machine claim 8, **characterized in, that** the viscous damping force is adjusted with the adjustable flow restrictor (14) by choice of liquid used and by choosing the damping between 1,0 x 10⁵ Ns/m - 1,0 x 10⁷ Ns/m.

## Patentansprüche

1. Faserbahnmaschine, die einen Dämpfer zum Steuern von Vibrationen von unterschiedlichen Komponenten von Abschnitten und/oder Vorrichtungen der Faserbahnmaschine aufweist, wobei der Dämpfer (10) Folgendes aufweist:
einen Rahmen (11) und ein Stützelement (12) zum Anbringen des Dämpfers (10) an einer Komponente einer Faserbahnmaschine zum Dämpfen von Vibrationen,
innerhalb des Rahmens (11) ein Flüssigkeitsvolumen, vorzugsweise ein Ölvolumen (13),
einen Kanal (16) zur Flüssigkeitsdurchströmung,
ein einstellbares Strömungsbegrenzungselement (14), das in dem Kanal (16) angeordnet ist, zur Steuerung des Stroms der Flüssigkeit in dem Flüssigkeitsvolumen (13), und
eine träge Masse (15), die an dem Rahmen (11) mittels Montagefedern (17) angebracht ist, die in dem Flüssigkeitsvolumen (13) schwimmen,
und dass die träge Masse (15) in Richtung der Vibration (VD) derart beweglich ist, dass, wenn der Rahmen (11) vibriert, die träge Masse (15) sich in Richtung des Stützelements (12) bewegt und das Flüssigkeitsvolumen (13) dazu bringt, sich zu verringern, und wobei ein Flüssigkeitsstrom in den Kanal (16) einen Druckverlust in dem Kanal (16) erzeugt, was eine Dämpfung erzeugt.

2. Faserbahnmaschine nach Anspruch 1,
**dadurch gekennzeichnet, dass** der Dämpfer (10) mittels einer Montageeinrichtung (24;34) derart an einer Komponente (22;37) der Faserbahnmaschine montiert ist, dass das Stützelement (12) des Dämpfers (10) an der Komponente (22;37) ohne Verbindung zu einer festen Tragstruktur angebracht ist.

3. Faserbahnmaschine nach Anspruch 1 oder 2,
**dadurch gekennzeichnet, dass** die Faserbahnmaschine einen zwischen einer Walze (21) und ihrem Gegenelement (25) gebildeten Nip (N) aufweist, und dass der Dämpfer (10) zum Steuern der Vibrationen an wenigstens einem Ende einer Welle der Walze (21) angebracht ist.

4. Faserbahnmaschine nach Anspruch 1 oder 2,
**dadurch gekennzeichnet, dass** die Faserbahnmaschine einen zwischen einer Walze (31) und ihrem Gegenelement (35) gebildeten Nip (N) aufweist, und dass der Nip ein Wickelnip (N) ist, der zwischen einer Mutterrolle (31) und einem Wickelzylinder (35) gebildet ist, wobei die Mutterrolle (31) mittels Wickelgabeln (37) gegen den Wickelzylinder (35) abgestützt ist, und dass der Dämpfer (10) an der Wickelgabel (37) angebracht ist.

5. Faserbahnmaschine nach Anspruch 3,
**dadurch gekennzeichnet, dass** der Nip (N) ein Kalander-, Leimpressen- oder Wickelnip (N) ist.

6. Faserbahnmaschine nach Anspruch 1,
**dadurch gekennzeichnet, dass** die Montagefedern (21) Scheibenfedern sind.

7. Faserbahnmaschine nach Anspruch 1,
**dadurch gekennzeichnet, dass** die Trägheit der trägen Masse (15) der Bewegung des Rahmens (11) entgegengerichtet ist, wenn die Vibrationsfrequenz die niedrigste natürliche Frequenz des Dämpfers (10) überschreitet.

8. Faserbahnmaschine nach Anspruch 1,
**dadurch gekennzeichnet, dass** das einstellbare Strömungsbegrenzungselement (14) dafür vorgesehen ist, eine viskose Dämpfungskraft zu erzeugen.

9. Faserbahnmaschine nach Anspruch 8,
**dadurch gekennzeichnet, dass** die viskose Dämpfungskraft mittels des einstellbaren Strömungsbegrenzungselements (14) durch Auswahl der verwendeten Flüssigkeit und durch Auswählen der Dämpfung zwischen 1,0 x 10⁵ Ns/m - 1,0 x 10⁷ Ns/m eingestellt wird.

## Revendications

1. Machine à nappe fibreuse comportant un amortisseur pour contrôler les vibrations de différents composants de sections et/ou dispositifs de la machine à nappe fibreuse, l'amortisseur (10) comprenant
un châssis (11) et un élément support (12) pour fixer l'amortisseur (10) à un composant d'une machine à nappe fibreuse afin de d'amortir les vibrations,
à l'intérieur du châssis (11), un volume de liquide, avantageusement un volume d'huile (13),
un canal (16) pour l'écoulement du liquide,
un restricteur d'écoulement réglable (14) situé dans le canal (16) pour contrôler l'écoulement du liquide dans le volume de liquide (13) et
une masse d'inertie (15) montée sur le châssis (11) à l'aide de ressorts de montage (17) flottant dans le volume de liquide (13)
et la masse d'inertie (15) étant mobile dans le sens de vibration (VD) de manière à ce que, lorsque le châssis (11) vibre, la masse d'inertie (15) se déplace vers l'élément support (12) et force le volume de liquide à décroître (13) et un volume de liquide à entrer dans le canal (16) en créant une perte de pression dans ledit canal (16), ce qui assure l'amortissement.

2. Machine à nappe fibreuse selon la revendication 1, **caractérisée en ce que** l'amortisseur (10) est monté sur un composant (22; 37) de la machine à nappe fibreuse par un moyen de montage (24; 34) de manière à ce que l'élément support (12) de l'amortisseur (10) soit fixé au composant (22; 37) sans connexion à une structure support fixe.

3. Machine à nappe fibreuse selon la revendication 1 ou 2, **caractérisée en ce que** la machine à nappe fibreuse comporte un interstice (N) formé entre un rouleau (21) et son contre-élément (25) et que l'amortisseur (10) permettant de contrôler les vibrations est monté à au moins une extrémité d'un arbre du rouleau (21).

4. Machine à nappe fibreuse selon la revendication 1 ou 2, **caractérisée en ce que** la machine à nappe fibreuse comporte un interstice (N) formé entre un rouleau (31) et son contre-élément (35) et que l'interstice est un interstice d'enroulement (N) formé entre un rouleau parent (31) et un cylindre d'enroulement(35) et dans lequel le rouleau parent (31) est supporté contre le cylindre d'enroulement (35) par des fourches d'enroulement (37), et que l'amortisseur (10) est fixé à la fourche d'enroulement (37).

5. Machine à nappe fibreuse selon la revendication 3, **caractérisée en ce que** l'interstice (N) est in interstice (N) d'une calandre, d'un collager ou d'enroulement (N).

6. Machine à nappe fibreuse selon la revendication 1, **caractérisée en ce que** les ressorts de montage (17) sont des ressorts à disques.

7. Machine à nappe fibreuse selon la revendication 1, **caractérisée en ce que** l'inertie de la masse d'inertie (15) s'oppose au mouvement du châssis (11) lorsque la fréquence de vibration excède la fréquence naturelle minimale de l'amortisseur (10).

8. Machine à nappe fibreuse selon la revendication 1, **caractérisée en ce que** le restricteur d'écoulement réglable (14) est conçu pour créer une force d'amortissement visqueuse.

9. Machine à nappe fibreuse selon la revendication 8, **caractérisée en ce que** la force d'amortissement visqueuse est ajustée à l'aide du restricteur d'écoulement réglable (14) par le choix du liquide utilisé et en choisissant un amortissement allant de 1,0 x 10⁵ Ns/m à 1,0 x 10⁷ Ns/m.
